# EUROPEAN PATENT SPECIFICATION

(11) **EP 2 162 495 B1**
(45) Date of publication and mention of the grant of the patent: **09.03.2011**
(21) Application number: 08756426.6
(22) Date of filing: 29.05.2008
(51) Int. Cl.: C08L 71/00

(54) **BLACK-COLORED THERMOPLASTIC POLY (ARYLENE ETHER) COMPOSITION, ARTICLE, PREPARATION METHOD**
SCHWARZ GEFÄRBTE THERMOPLASTISCHE POLY (ARYLENETHER)ZUSAMMENSETZUNG, GEGENSTAND, HERSTELLUNGSVERFAHREN
COMPOSITION, ARTICLE THERMOPLASTIQUE POLY(ÉTHER D'ARYLÈNE) DE COULEUR NOIRE ET PROCÉDÉ DE PRÉPARATION

(30) Priority: 06.06.2007 US 758935
(43) Date of publication of application: 17.03.2010
(73) Proprietor: SABIC Innovative Plastics IP B.V., 4612 PX Bergen op Zoom (NL)
(72) Inventor: ERMI, Brett David, Schenectady, New York 12303 (US); GERUS, Cynthia Therese, Delmar, New York 12054 (US); KLEI, Steven Raymond, Guilderland, New York 12084 (US)
(74) Representative: Bublak, Wolfgang
(86) International application number: PCT/US2008/065055
(87) International publication number: WO 2008/154163

(56) References cited:
- EP-A- 1 431 345
- WO-A-2005/035660
- WO-A-2006/039440
- US-B1- 6 471 763

## Description

### BACKGROUND OF THE INVENTION

Many consumer product manufacturers seek to improve the aesthetics and distinctiveness of their products by using new colors in the plastic components of their products. For example, in the area of television displays there has recently been a desire for plastic formulations having a high gloss and deep bluish black ("jet black") color. In practice, it has been difficult to prepare jet black thermoplastic compositions using either dyes or pigments. In particular, it has been difficult to formulate jet black thermoplastic compositions using carbon black as a pigment, because the resulting blends have not exhibited the desired deep bluish black color. Particularly when one considers the convenience of using carbon black rather than a combination of dyes, as well as the generally superior light stability of carbon black versus dyes, there remains a need for thermoplastic formulations that exhibit desirable physical, thermal, and electrical properties and further exhibit a deep bluish black color with good light stability.

### BRIEF DESCRIPTION OF THE INVENTION

Subject-matter of the present invention are products and methods according to the attached claims 1-14.

The above-described and other drawbacks are alleviated by a black-colored thermoplastic composition according to claim 1.

The black-colored thermoplastic composition, comprises: 20 to 80 parts by weight of a poly(arylene ether); 20 to 80 parts by weight of a styrenic polymer; and 0.1 to 2 parts by weight of a carbon black having a heating loss of at least 3 weight percent, wherein the heating loss is measured after 30 minutes at 125°C and determined according to ASTM D1509-95, and a volatiles content of at least 5 weight percent measured according to DIN 53552; wherein all parts by weight are based on 100 parts by weight total of the poly(arylene ether) and the styrenic polymer; and wherein the black-colored thermoplastic composition exhibits a CIE lightness value of CIE 1976, L*, less than or equal to 5 measured according to ASTM E308-06 using an angle of 45° with specular light excluded.

Another embodiment is a black-colored thermoplastic composition, comprising: 30 to 50 parts by weight of a poly(arylene ether); 15 to 35 parts by weight of a rubber-modified polystyrene; 25 to 45 parts by weight of a homopolystyrene; and 0.3 to 1.5 parts by weight of a carbon black having a heating loss of 3 to 4 weight percent wherein the heating loss is measured after 30 minutes at 125°C and determined according to ASTM D1509-95, a volatiles content of 9 to 30 weight percent measured according to DIN 53552, and a pH of 2 to 4 measured according to ASTM D1512; wherein all parts by weight are based on 100 parts by weight total of the poly(arylene ether), the rubber-modified polystyrene, and the homopolystyrene; and wherein the black-colored thermoplastic composition exhibits a CIE lightness value of CIE 1976, L*, of 2 to 4 measured at 45° with specular light excluded according to ASTM E308-06 and a CIE 1976 b* value of -1.5 to 0 measured according to ASTM E308-06.

Another embodiment is a black-colored thermoplastic composition, consisting of: 30 to 50 parts by weight of a poly(arylene ether); 15 to 35 parts by weight of a rubber-modified polystyrene; 25 to 45 parts by weight of a homopolystyrene; 0.3 to 1.5 parts by weight of a carbon black having a heating loss of 3 to 4 weight percent, wherein the heating loss is measured after 30 minutes at 125°C and determined according to ASTM D1509-95, a volatiles content of 9 to 30 weight percent measured according to DIN 53552, and a pH of 2 to 4 measured according to ASTM D1512; and optionally, up to 5 parts by weight of an additive selected from the group consisting of stabilizers, mold release agents, processing aids, drip retardants, nucleating agents, dyes, pigments, antioxidants, anti-static agents, blowing agents, metal deactivators, antiblocking agents, nanoclays, fragrances, and combinations thereof; wherein all parts by weight are based on 100 parts by weight total of the poly(arylene ether), the rubber-modified polystyrene, and the homopolystyrene; and wherein the black-colored thermoplastic composition exhibits a CIE lightness value of CIE 1976, L*, of 2 to 4 measured at 45° with specular light excluded according to ASTM E308-06; and a ClE 1976 b* value of -1.5 to 0 measured according to ASTM E308-06.

Another embodiment is a method of preparing a black-colored thermoplastic composition, comprising: melt-kneading 20 to 80 parts by weight of a poly(arylene ether), 20 to 80 parts by weight of a styrenic polymer, and 0.1 to 2 parts by weight of a carbon black having a heating loss of at least 3 weight percent, wherein the heating loss is measured after 30 minutes at 125°C and determined according to ASTM D1509-95 and a volatiles content of at least 5 weight percent measured according to DIN 53552 to form a black-colored thermoplastic composition; wherein all parts by weight are based on 100 parts by weight total of the poly(arylene ether) and the styrenic polymer; and wherein the black-colored thermoplastic composition exhibits a CIE lightness value of CIE 1976, L*, less than or equal to 5 measured according to ASTM E308-6 using an angle of 45° with specular light excluded.

Another embodiment is a method of preparing a black-colored thermoplastic composition, comprising: melt-kneading 30 to 50 parts by weight of a poly(arylene ether), 15 to 35 parts by weight of a rubber-modified polystyrene, 25 to 45 parts by weight of a homopolystyrene, and 0.3 to 1.5 parts by weight of a carbon black having a heating loss of 3 to 4 weight percent, wherein the heating loss is measured after 30 minutes at 125°C and determined according to ASTM D1509-95 and a volatiles content of 9 to 30 weight percent measured according to DIN 53552 and a pH of 2 to 4 measured according to ASTM D1512 to form a black-colored thermoplastic composition; wherein all parts by weight are based on 100 parts by weight total of the poly(arylene ether), the rubber-modified polystyrene, and the homopolystyrene; and wherein the black-colored thermoplastic composition exhibits a CIE lightness value of CIE 1976, L*, of 2 to 4 measured at 45° with specular light excluded according to ASTM E308-06 and a CIE1976 b* value of -1.5 to 0 measured according to ASTM E308-06.

There is described a not-claimed black-colored thermoplastic composition, comprising: about 60 to about 95 parts by weight of a polycarbonate; about 5 to about 40 parts by weight of an impact modifier composition; and about 0.1 to about 2 parts by weight of a carbon black having a heating loss of at least 3 weight percent measured according to ASTM D1509, and a volatiles content of at least 5 weight percent measured according to DIN 53552; wherein all parts by weight are based on 100 parts by weight total of the polycarbonate and the impact modifier composition; and wherein the black-colored thermoplastic composition exhibits a CIE lightness value, L*, less than or equal to 5 measured according to ASTM E308 using an angle of 45° with specular light excluded.

There is also described a not-claimed black-colored thermoplastic composition, comprising: about 64 to about 84 parts by weight of a polycarbonate; about 16 to about 36 parts by weight of an impact modifier composition comprising about 8 to about 18 parts by weight of a poly(acrylonitrile-butadiene-styrene), and about 8 to about 18 parts by weight of a poly(styrene-acrylonitrile); and about 0.3 to about 1.5 parts by weight of a carbon black having a heating loss of 3 to about 4 weight percent measured according to ASTM D1509, a volatiles content of 9 to about 30 weight percent measured according to DIN 53552, and a pH of about 2 to about 4 measured according to ASTM D1512; wherein all parts by weight are based on 100 parts by weight total of the polycarbonate and the impact modifier composition; and wherein the black-colored thermoplastic composition exhibits a CIE lightness value, L*, of 2 to 4 measured at 45° with specular light excluded according to ASTM E308, and a CIE b* value of -1.5 to 0 measured according to ASTM E308.

There is further described a not-claimed method of preparing a black-colored thermoplastic composition, comprising: melt-kneading about 60 to about 95 parts by weight of a polycarbonate, about 5 to about 40 parts by weight of an impact modifier composition, and about 0.1 to about 2 parts by weight of a carbon black having a heating loss of at least 3 weight percent measured according to ASTM D1509, and a volatiles content of at least 5 weight percent measured according to DIN 53552 to form a black-colored thermoplastic composition; wherein all parts by weight are based on 100 parts by weight total of the polycarbonate and the impact modifier composition; and wherein the black-colored thermoplastic composition exhibits a CIE lightness value, L*, less than or equal to 5 measured according to ASTM E308 using an angle of 45° with specular light excluded.

These and other embodiments, including articles comprising the compositions, are described in detail below.

### DETAILED DESCRIPTION OF THE INVENTION

The present inventors have conducted experiments in search of thermoplastic compositions that exhibit both a jet black appearance and desirable physical properties. They have made the surprising discovery that the combination of either of two particular resin formulations and a particular carbon black type produces the desired properties. Specifically, when the resin composition is a poly(arylene ether)/styrenic polymer blend or a polycarbonate/impact modifier blend, and when the carbon black has a heating loss of at least 3 weight percent measured according to ASTM D1509 and a volatiles content of at least 5 weight percent measured according to DIN 53552, the resulting thermoplastic composition exhibits a deep black color as evidenced by a CIE lightness value, L*, less than or equal to 5 measured according to ASTM E308. When the same carbon black is used with other resin types, the desirable color properties are not obtained. And, when the same resin types are used with different carbon blacks, the desirable color properties are not obtained. There is therefore a true synergy exhibited for the combination of the carbon black having particular properties with one of two specific resin types.

Thus, one embodiment is a black-colored thermoplastic composition, comprising:
100 parts by weight of a resin composition being
   a poly(arylene ether) composition comprising 20 to 80 parts by weight of a poly(arylene ether) and 20 to 80 parts by weight of a styrenic polymer, and
0.1 to 2 parts by weight of a carbon black having a heating loss of at least 3 weight percent, wherein the heating loss is measured after 30 minutes at 125°C and determined according to ASTM D1509-95, and a volatiles content of at least 5 weight percent measured according to DIN 53552;
wherein all parts by weight are based on 100 parts by weight of the resin composition; and wherein the black-colored thermoplastic composition exhibits a CIE lightness value of CIE 1976, L*, less than or equal to 5, specifically less than or equal to 4, more specifically less than or equal to 3, still more specifically 2.5 to 5, measured according to ASTM E308-06 using an angle of 45° with specular light excluded.

The resin comprises a poly(arylene ether) and a styrenic polymer. Thus, one embodiment is a black-colored thermoplastic composition, comprising: 20 to 80 parts by weight of a poly(arylene ether); 20 to 80 parts by weight of a styrenic polymer; and 0.1 to 2 parts by weight of a carbon black having a heating loss of at least 3 weight percent, wherein the heating loss is measured after 30 minutes at 125°C and determined according to ASTM D1509-95 and a volatiles content of at least 5 weight percent measured according to DIN 53552; wherein all parts by weight are based on 100 parts by weight total of the poly(arylene ether) and the styrenic polymer. For brevity, this composition is sometimes referred to herein as "the poly(arylene ether) composition". There is also described a not-claimed black-colored thermoplastic composition, comprising: about 60 to about 95 parts by weight of a polycarbonate; about 5 to about 40 parts by weight of an impact modifier composition; and about 0.1 to about 2 parts by weight of a carbon black having a heating loss of at least 3 weight percent measured according to ASTM D1509, and a volatiles content of at least 5 weight percent measured according to DIN 53552; wherein all parts by weight are based on 100 parts by weight total of the polycarbonate and the impact modifier composition. For brevity, this composition is sometimes referred to herein as the "the polycarbonate composition". The resin compositions and their respective components are described in greater detail below.

Unless otherwise specified, descriptions of carbon black properties and amounts are applicable to both the poly(arylene ether) composition and the (not-claimed) polycarbonate composition. Similarly, unless otherwise specified, descriptions of color properties and physical properties of the black-colored thermoplastic composition as a whole are applicable to both the poly(arylene ether) composition and the polycarbonate composition.

The carbon black amount in the black-colored thermoplastic composition is 0.1 to 2 parts by weight, specifically 0.3 to 1.5 parts by weight, based on 100 parts by weight of the resin composition. The heating loss value of the carbon black is at least 3 weight percent, specifically at least 3.2 weight percent, more specifically at least 3.4 weight percent, still more specifically 3 to 4 weight percent, wherein in each case the heating loss is measured after 30 minutes at 125°C and determined according to ASTM D1509-95. The volatiles content of the carbon black is at least 5 weight percent, specifically at least 7 weight percent, more specifically at least 9 weight percent, still more specifically 5 to 30 weight percent, yet more specifically 10 to 30 weight percent, even more specifically 15 to 30 weight percent measured according to DIN 53552.

In some embodiments, the carbon black has a pH of 2 to 4, specifically 2 to 3, measured according to ASTM D1512-95. In some embodiments, the carbon black is the product of a process comprising oxidative aftertreatment. Carbon black preparation methods comprising oxidative aftertreatment with for example, nitric acid, nitrogen dioxide, and ozone are known. See, for example, in U.S. Patent Nos. 3,245,820 to Melore et al., 3,364,048 to Earl et al., 3,495,999 to Hagopian, 3,565,657 to Boonstra et al, 4,075,140 to Hunt, 6,136,286 to Okuyama et al., 6,471,763 B1 to Karl, and 6,471,933 B1 to Dotson; and U.S. Patent Application Publication No. US 2003/0180210 A1 of Karl.

In some embodiments, the carbon black has a cetyltrimethylammonium bromide surface area of 400 to 600 meter²/gram measured according to ASTM D3765-04. In some embodiments, the carbon black has an iodine absorption of 200 to 300 milligrams/gram measured according to ASTM D1510-06a. In some embodiments, the ratio of the cetyltrimethylammonium bromide surface area to the iodine absorption is about 1.5 to about 2.5 meter²/milligram, specifically about 1.8 to about 2 meter²/milligram.

The black-colored thermoplastic composition has a deep black appearance. This appearance can be correlated with various objective color metrics. Although the objective color metrics are determined by testing a molded article, their values are characteristic of the composition from which the article is molded. One objective color metric is the CIE lightness value, L*, for which lower values correspond to darker colors and higher values correspond to lighter colors. The black-colored thermoplastic composition exhibits a CIE lightness value of CIE 1976, L*, less than or equal to 5 measured according to ASTM E308-06 using an angle of 45° with specular light excluded. The L* value can specifically be less than or equal to 4, more specifically less than or equal to 3, still more specifically 2 to 5, yet more specifically 2 to 4. Another objective color metric is the CIE b* value, for which lower values correspond to blue and higher values correspond to yellow. In some embodiments, the black-colored thermoplastic composition exhibits a CIE1976 b* value of about -1.5 to about 0 measured according to ASTM E308-06. Taken together, the L* and b* limitations are characteristic of a bluish black.

The black-colored thermoplastic composition can also exhibit high gloss. For example, in some embodiments, the black-colored thermoplastic composition further exhibits a 60° gloss value of at least 90 percent, specifically 90 to about 105 percent, measured according to ASTM D523-89(1999). This gloss value can be obtained for an as-molded part, for example a color chip molded as described in the working examples below.

The black-colored thermoplastic composition is a poly(arylene ether)/styrenic polymer composition comprising 20 to 80 parts by weight of a poly(arylene ether), 20 to 80 parts by weight of a styrenic polymer, based on 100 parts by weight total for the poly(arylene ether) and the styrenic polymer.

Suitable poly(arylene ether)s include those comprising repeating structural units having the formula 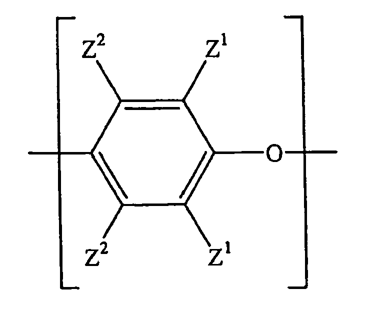 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue may also contain one or more heteroatoms such as halogens, oxygen, nitrogen, sulfur, silicon, or phosphorus. When substituted, the hydrocarbyl residue can contain the heteroatoms pendant to or within the backbone of the hydrocarbon residue. As one example, Z¹ may be a di-n-butylaminomethyl group formed by reaction of the methyl group of a terminal 1-hydroxy-2,6-dimethylphenylene residue with the di-n-butylamine component of an oxidative polymerization catalyst.

In some embodiments, the poly(arylene ether) comprises 2,6-dimethyl-1,4-phenylene ether units, 2,3,6-trimethyl-1,4-phenylene ether units, or a combination thereof. In some embodiments, the poly(arylene ether) is a poly(2,6-dimethyl-1,4-phenylene ether).

As noted above, the poly(arylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(arylene ether) can be in the form of a homopolymer, a random copolymer, a graft copolymer, an ionomer, or a block copolymer, as well as combinations comprising at least one of the foregoing.

In some embodiments, the poly(arylene ether) has an intrinsic viscosity of about 0.1 to about 1 deciliter per gram measured at 25°C in chloroform. Specifically, the poly(arylene ether) intrinsic viscosity may be about 0.2 to about 0.8 deciliter per gram, more specifically about 0.3 to about 0.6 deciliter per gram, still more specifically about 0.35 to about 0.5 deciliter per gram.

Methods of producing poly(arylene ether)s are known in the art, and many poly(arylene ether)s are commercially available.

The poly(arylene ether) amount is 20 to 80 parts by weight, based on 100 parts by weight total for the poly(arylene ether) and the styrenic polymer. Within this range, the poly(arylene ether) amount can be 30 to 70 parts by weight, specifically 30 to 60 parts by weight, more specifically 30 to 50 parts by weight, still more specifically 35 to 45 parts by weight.

The poly(arylene ether) composition comprises a styrenic polymer. In general, the styrenic polymer is a polymer comprising at least 10 weight percent of units derived from polymerization of styrene or another alkenyl aromatic monomer represented by the structure 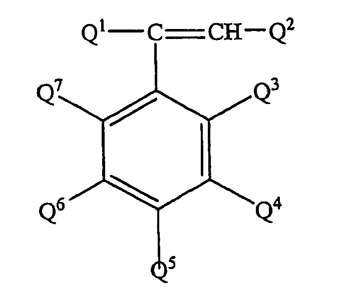 wherein Q¹ and Q² each independently represent a hydrogen atom, a C₁-C₈ alkyl group, or a C₂-C₈ alkenyl group; Q³ and Q⁷ each independently represent a hydrogen atom, or a C₁-C₈ alkyl group; and Q⁴, Q⁵, and Q⁶ each independently represent a hydrogen atom, a C₁-C₈ alkyl group, or a C₂-C₈ alkenyl group, or Q³ and Q⁴ are taken together with the central aromatic ring to form a naphthyl group, or Q⁴ and Q⁵ are taken together with the central aromatic ring to form a naphthyl group. Specific alkenyl aromatic monomers include, for example, styrene, methylstyrenes such as alpha-methylstyrene and p-rnethylstyrene, and p-t-butylstyrene.

Particular classes of styrenic polymers include, for example, homopolystyrenes, rubber-modified polystyrenes, (unhydrogenated) block copolymers of an alkenyl aromatic monomer and a conjugated diene, hydrogenated block copolymers of an alkenyl aromatic monomer and a conjugated diene, and the like, and mixtures thereof. In some embodiments, the styrenic polymer comprises a homopolystyrene, specifically a polystyrene having a weight average molecular weight of about 20,000 to about 300,000 atomic mass units. The polystyrene can be an atactic polystyrene. In some embodiments, the styrenic polymer comprises a rubber-modified polystyrene (also sometimes referred to as a high-impact polystyrene or HIPS). Suitable rubber modified polystyrenes include those having a total weight average molecular weight of about 20,000 to about 300,000 atomic mass units; about 80 to about 95 weight percent polystyrene and about 5 to about 20 weight percent polybutadiene; and a polybutadiene particle size of about 0.1 to about 30 micrometers. In some embodiments, the styrenic polymer comprises a block copolymer of an alkenyl aromatic monomer and a conjugated diene, a hydrogenated block copolymer of an alkenyl aromatic monomer, or a mixture thereof. The styrenic polymer can comprise at least one block having a random or controlled distribution of styrene and butadiene; such styrenic polymers include those sold under the tradenames KRATON A-RP6936 and KRATON A-RP6935 by Kraton Polymers, and L601 by Asahi. In some embodiments, the styrenic polymer comprises a polystyrene-poly(ethylenebutylene)-polystyrene triblock copolymer. In some embodiments, the styrenic polymer comprises a polystyrene-poly(ethylene-butylene)-polystyrene triblock copolymer comprising about 10 to about 70 weight percent polystyrene, based on the weight of the triblock copolymer. In some embodiments, the styrenic polymer comprises a radial block copolymer of an alkenyl aromatic monomer and a conjugated diene; wherein the radial block copolymer has 50 to about 75 weight percent of repeating units derived from the alkenyl aromatic monomer; and wherein the radial block copolymer has a number average molecular weight less than or equal to 70,000 atomic mass units.

Combinations of two or more different styrenic polymers can be used. Thus, in some embodiments, the styrenic polymer comprises a homopolystyrene and a rubber-modified polystyrene. In some embodiments, the styrenic polymer comprises a homopolystyrene in combination with a block copolymer of an alkenyl aromatic monomer and a conjugated diene, a hydrogenated block copolymer of an alkenyl aromatic monomer, or a mixture thereof.

Methods of producing styrenic polymers are known in the art, and many styrenic polymers are commercially available.

In the poly(arylene ether) composition, the styrenic polymer is present in an amount of 20 to 80 parts by weight, based on the total weight of the poly(arylene ether) and the styrenic polymer. Within this range, the styrenic polymer amount can be 30 to 80 parts by weight, specifically 40 to 70 parts by weight, more specifically 50 to 70 weight percent, still more specifically 55 to 65 weight percent.

In some embodiments, the poly(arylene ether) composition comprises 30 to 50 parts by weight of the poly(arylene ether), 40 to 80 parts by weight of the styrenic polymer, and 0.3 to 1.5 parts by weight of the carbon black; wherein the styrenic polymer comprises a rubber-modified polystyrene and a homopolystyrene.

A specific poly(arylene ether) composition comprises 30 to 50 parts by weight of a poly(arylene ether); 15 to 35 parts by weight of a rubber-modified polystyrene; 25 to 45 parts by weight of a homopolystyrene; and 0.3 to 1.5 parts by weight of a carbon black having a heating loss of 3 to 4 weight percent, wherein the heating loss is measured after 30 minutes at 125°C and determined according to ASTM D1509-95 a volatiles content of 9 to 30 weight percent measured according to DIN 53552, and a pH of 2 to 4 measured according to ASTM D1512; wherein all parts by weight are based on 100 parts by weight total of the poly(arylene ether), the rubber-modified polystyrene, and the homopolystyrene; and wherein the black-colored thermoplastic composition exhibits a CIE lightness value of CIE 1976, L*, of 2 to 4 measured at 45° with specular light excluded according to ASTM E308-06 and a CIE1976 b* value of-1.5 to 0 measured according to ASTM E308-06;

Another specific poly(arylene ether) composition consists of 30 to 50 parts by weight of a poly(arylene ether); 15 to 35 parts by weight of a rubber-modined polystyrene; 25 to 45 parts by weight of a homopolystyrene; 0.3 to 1.5 parts by weight of a carbon black having a heating loss of 3 to 4 weight percent, wherein the heating loss is measured according to ASTM D1509-95, a volatiles content of 9 to 30 weight percent measured according to DIN 53552, and a pH of 2 to 4 measured according to ASTM D1512; and optionally, up to 5 parts by weight of an additive selected from the group consisting of stabilizers, mold release agents, processing aids, drip retardants, nucleating agents, dyes, pigments, antioxidants, anti-static agents, blowing agents, metal deactivators, antiblocking agents, nanoclays, fragrances, and combinations thereof; wherein all parts by weight are based on 100 parts by weight total of the poly(arylene ether), the rubber-modified polystyrene, and the homopolystyrene; and wherein the black-colored thermoplastic composition exhibits a CIE lightness value of CIE 1976, L*, of 2 to 4 measured at 45° with specular light excluded according to ASTM E308-06 and a CIE 1976 b* value of -1.5 to 0 measured according to ASTM E308-06.

There is also described a not-claimed black-colored thermoplastic composition which can comprise about 60 to about 95 parts by weight of a polycarbonate; about 5 to about 40 parts by weight of an impact modifier composition; and about 0.1 to about 2 parts by weight of a carbon black having a heating loss of at least 3 weight percent measured according to ASTM D1509, and a volatiles content of at least 5 weight percent measured according to DIN 53552; wherein all parts by weight are based on 100 parts by weight total of the polycarbonate and the impact modifier composition; and wherein the black-colored thermoplastic composition exhibits a CIE lightness value, L*, less than or equal to 5 measured according to ASTM E308 using an angle of 45° with specular light excluded.

As used herein, the term "polycarbonate" refers to a polymer comprising repeating carbonate units of the formula 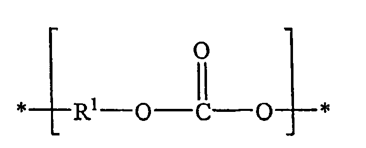 in which each occurrence of R¹ is independently a C₆-C₆₀ hydrocarbylene group, provided that at least about 60 percent of the total number of R¹ groups contain aromatic moieties and the balance thereof are aliphatic, alicyclic, or aromatic. In some embodiments, each R¹ is a C₆-C₃₀ aromatic group, where "aromatic group" refers to a group comprising at least one aromatic moiety. R¹ is typically the residue of a dihydroxy compound of the formula HO-R¹-OH, in particular a dihydroxy compound of the formula

HO-A¹-Y¹-A²-OH

wherein A¹ and A² are each independently a monocyclic divalent aromatic group and Y¹ is a single bond or a bridging group having one or more atoms that separate A¹ from A². In an exemplary embodiment, one atom separates A¹ from A². Specifically, each R¹ can be derived from a dihydroxy aromatic compound of the formula 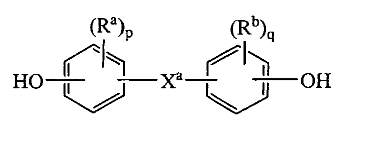 wherein R^{a} and R^{b} each independently represent a halogen or C₁-C₁₂ alkyl group; and p and q are each independently 0, 1, 2, 3, or 4. It will be understood that when p and/or q is 0, hydrogen atoms are bonded to the unspecified positions of the respective phenylene rings. Also in preceding formula, X^{a} represents a bridging group connecting the two hydroxy-substituted aromatic groups, where the bridging group and the hydroxy substituent of each phenylene ring are disposed ortho, meta, or para (specifically para) to each other on the phenylene ring. In some embodiments, the bridging group X^{a} is single bond, -O-, -S-, -S(O)-, -S(O)₂-, -C(O)-, or an unsubstituted or substituted C₁-C₁₈ hydrocarbylene group. When substituted, the C₁-C₁₈ hydrocarbylene group can comprise heteroatoms such as halogens, oxygen, nitrogen, sulfur, silicon, or phosphorous. The C₁-C₁₈ hydrocarbylene group can be disposed such that the phenylene groups connected thereto are each connected to a common alkylidene carbon or to different carbons of the C₁-C₁₈ hydrocarbylene group. In one embodiment, p and q are each 1, and R^{a} and R^{b} are each a C₁-C₃ alkyl group, specifically methyl, disposed meta to the hydroxy group on each phenylene group.

In some embodiments, X^{a} is a substituted or unsubstituted C₃₋C₁₈ cycloalkylidene, a C₁-C₂₅ alkylidene of formula -C(R^{c})(R^{d})- wherein R^{c} and R^{d} are each independently hydrogen, C₁-C₁₂ alkyl, C₃-C₁₂ cycloalkyl, C₇-C₁₂ arylalkyl, C₁-C₁₂ heteroalkyl, or cyclic C₇-C₁₂ heteroarylalkyl, or a group of the formula -C(=R^{e})-wherein R^{e} is a C₁-C₁₂ hydrocarbylene group. Exemplary groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene. A specific example wherein X^{a} is a substituted cycloalkylidene is the cyclohexylidene-bridged, alkyl-substituted bisphenol of the formula 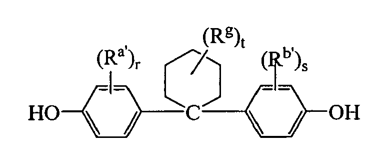 wherein R^{a}' and R^{b}' are each independently C₁-C₁₂ alkyl; R^{g} is C₁-C₁₂ aliphatic hydrocarbyl or halogen; r and s are each independently 0, 1, 2, 3, or 4; and t is 0 to 10. In a specific embodiment, at least one of r or s is 1 and at least one of R^{a}' and R^{b}' is disposed meta to the cyclohexylidene bridging group. The substituents R^{a}', R^{b}', and R^{g} may, when comprising an appropriate number of carbon atoms, be straight chain, cyclic, bicyclic, branched, saturated, or unsaturated. In one embodiment, R^{a}' and R^{b}' are each independently C₁-C₄ alkyl, R^{g} is C₁-C₄ alkyl, r and s are each 1, and t is 0 to 5. In another specific embodiment, R^{a}', R^{b}' and R^{g} are each methyl, r and s are each 1, and t is 0 or 3. The cyclohexylidene-bridged bisphenol can be the reaction product of two moles of o-cresol with one mole of cyclohexanone. In another exemplary embodiment, the cyclohexylidene-bridged bisphenol is the reaction product of two moles of a cresol with one mole of a hydrogenated isophorone (for example, 1,1,3-trimethyl-3-cyclohexane-5-one). Such cyclohexane-containing bisphenols, for example the reaction product of two moles of a phenol with one mole of a hydrogenated isophorone, are useful for making polycarbonate polymers with high glass transition temperatures and high heat distortion temperatures. Cyclohexyl bisphenol-containing polycarbonates are supplied by Bayer Co. under the APEC^{®} trade name.

In another embodiment, X^{a} is a C₁-C₁₈ alkylene group, a C₃-C₁₈ cycloalkylene group, a fused C₆-C₁₈ cycloalkylene group, or a group of the formula -B¹-W-B²- wherein B¹ and B² are the same or different C₁-C₆ alkylene group and W is a C₃-C₁₂ cycloalkylidene group or a C₆-C₁₆ arylene group.

X^{a} can also be a substituted C₃-C₁₈ cycloalkylidene of the formula 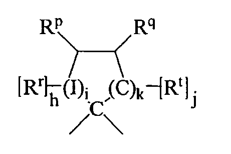 wherein R^{r}, R^{p}, R^{q}, and R^{t} are independently hydrogen, halogen, oxygen, or C₁-C₁₂ organic groups; I is a direct bond, a carbon, or a divalent oxygen, sulfur, or -N(Z)-where Z is hydrogen, halogen, hydroxy, C₁-C₁₂ alkyl, C₁-C₁₂ alkoxy, or C₁-C₁₂ acyl; h is 0, 1, or 2; j is 1 or 2; i is 0 or 1; and k is 0, 1, 2, or 3; provided that at least two of R^{r}, R^{p}, R^{q}, and R^{t} taken together are a fused cycloaliphatic, aromatic, or heteroaromatic ring. It will be understood that where the fused ring is aromatic, the ring as shown in the preceding formula will have an unsaturated carbon-carbon linkage where the ring is fused. When k is 1 and i is 0, the ring as shown in the preceding formula contains 4 carbon atoms; when k is 2 and i is 0, the ring as shown in the preceding formula contains 5 carbon atoms; and when k is 3 and i is 0, the ring contains 6 carbon atoms. In one embodiment, two adjacent groups (for example, R^{q} and R^{t} taken together) form an aromatic group, and in another embodiment, R^{q} and R^{t} taken together form one aromatic group and R^{r} and R^{p} taken together form a second aromatic group. When R^{q} and R^{t} taken together form an aromatic group, R^{p} can be a double-bonded oxygen atom, such that R^{p} and the ring carbon atom to which it is bound form a carbonyl group.

Other useful aromatic dihydroxy compounds of the formula HO-R¹-OH include compounds of the formula 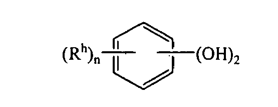 wherein each occurrence of R^{h} is independently a halogen atom (specifically, bromine), a C₁-C₁₀ hydrocarbyl such as a C₁-C₁₀ alkyl group, a halogen-substituted C₁-C₁₀ alkyl group, a C₆-C₁₀ aryl group, or a halogen-substituted C₆-C₁₀ aryl group; and n is 0, 1, 2, 3, or 4.

Some illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1 -bis(4-hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, and the like, as well as combinations comprising at least one of the foregoing dihydroxy compounds.

Additional examples of specific aromatic dihydroxy compounds include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. In one specific embodiment, the polycarbonate is a linear homopolymer derived from bisphenol A.

The polycarbonates can have an intrinsic viscosity, as determined in chloroform at 25°C, of about 0.3 to about 1.5 deciliters per gram (dL/g), specifically about 0.45 to about 1.0 dL/g. The polycarbonates can have a weight average molecular weight of about 10,000 to about 200,000 atomic mass units, specifically about 20,000 to about 100,000 atomic mass units as measured by gel permeation chromatography (GPC) using a crosslinked styrene-divinylbenzene column polycarbonate standards. GPC samples are prepared at a concentration of about 1 milligram/milliliter, and are eluted at a flow rate of about 1.5 milliliters/minute.

In some embodiments, the polycarbonate has a melt flow rate (MFR) of about 2 to about 40 grams per 10 minutes, specifically about 5 to about 30 grams per 10 minutes, measured at 300°C and 1.2 kilogram load. In some embodiments, the polycarbonate comprises a high-flow polycarbonate having an MFR value of about 25 to about 30 grams per 10 minutes, and a low-flow polycarbonate having an MFR value of about 4 to about 8 grams per 10 minutes.

The term "polycarbonates" as used herein includes homopolycarbonates, and copolymers comprising different R¹ moieties in the carbonate (referred to herein as "copolycarbonates"), as well as copolymers comprising carbonate units and other types of polymer units, such as ester units. The term "polycarbonates" further includes combinations comprising at least one homopolycarbonate and at least one copolycarbonate. As used herein, a "combination" is inclusive of blends, mixtures, alloys, reaction products, and the like. A specific type of copolymer is a polyester carbonate, also known as a polyestercarbonate. Such copolymers further contain, in addition to recurring carbonate chain units, repeating ester units of the formula 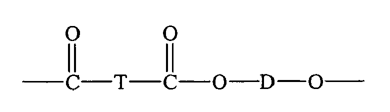 wherein D is a divalent group derived from a dihydroxy compound, and can be, for example, a C₂-C₁₀ alkylene group, a C₆-C₂₀ alicyclic group, a C₆-C₂₀ aromatic group or a polyoxyalkylene group in which the alkylene groups contain 2 to about 6 carbon atoms, specifically 2, 3, or 4 carbon atoms; and T is a divalent group derived from a dicarboxylic acid, and can be, for example, a C₂-C₁₀ alkylene group, a C₆-C₂₀ alicyclic group, a C₆-C₂₀ alkyl aromatic group, or a C₆-C₂₀ aromatic group. Copolyesters containing a combination of different T and/or D groups can be used. The polyesters can be branched or linear. In one embodiment, D is a C₂-C₃₀ alkylene group having a straight chain, branched chain, or cyclic (including polycyclic) structure. In another embodiment, D is derived from an aromatic dihydroxy compound such as those described above.

Examples of aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of isophthalic acid to terephthalic acid is about 91:9 to about 2:98. In another specific embodiment, D is a C₂-C₆ alkylene group and T is p-phenylene, m-phenylene, naphthalene, a divalent cycloaliphatic group, or a combination thereof. This class of polyester includes the poly(alkylene terephthalate)s.

The molar ratio of ester units to carbonate units in the polyestercarbonates can vary broadly, for example 1:99 to 99:1, specifically 10:90 to 90:10, more specifically 25:75 to 75:25, depending on the desired properties of the final composition.

In a specific embodiment, the polyester unit of a polyestercarbonate can be derived from the reaction of a combination of isophthalic and terephthalic diacids (or derivatives thereof) with resorcinol. In another specific embodiment, the polyester unit of a polyestercarbonate is derived from the reaction of a combination of isophthalic acid and terephthalic acid with bisphenol A. In a specific embodiment, the polycarbonate units are derived from bisphenol A. In another specific embodiment, the polycarbonate units are derived from resorcinol and bisphenol A in a molar ratio of resorcinol carbonate units to bisphenol A carbonate units of 1:99 to 99:1.

In some embodiments, the polycarbonate comprises repeating structural units of the formula 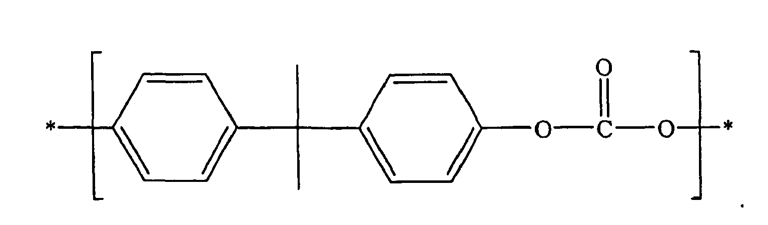 In some embodiments, the polycarbonate comprises the above repeating units in an amount of at least 50 weight percent, specifically at least 80 weight percent, more specifically at least 90 weight percent, still more specifically at least 95 weight percent, even more specifically at least 99 weight percent, based on the weight of the polycarbonate.

Methods of producing polycarbonates are known in the art, and many polycarbonates are commercially available.

The (not-claimed) polycarbonate composition comprises about 60 to about 95 parts by weight of the polycarbonate, based on 100 parts by weight total of the polycarbonate and the elastomer-modified graft polymer. Within this range, the polycarbonate amount can be about 60 to about 90 parts by weight, specifically about 64 to about 84 parts by weight, more specifically about 68 to about 78 parts by weight.

The (not-claimed) polycarbonate composition further comprises an impact modifier composition. Suitable impact modifier compositions include those comprising an elastomer-modified graft copolymer comprising (i) an elastomeric (that is, rubbery) polymer substrate having a glass transition temperature, T_{g}, below 0°C, more specifically about -40° to -80°C, and (ii) a rigid polymeric superstrate grafted to the elastomeric polymer substrate. As is known, elastomer-modified graft copolymers may be prepared by first providing an elastomeric polymeric backbone. At least one grafting monomer, and in some embodiments two or more grafting monomers, are then polymerized in the presence of the polymer backbone to obtain the graft copolymer.

Suitable elastomer-modified graft copolymers include, for example, poly(acrylonitrile-butadiene-styrene) (ABS), poly(acrylonitrile-styrene-butyl acrylate) (ASA), poly(methyl methacrylate-butadiene-styrene) (MBS), poly(methyl methacrylate-acrylonitrile-butadiene-styrene) (MABS), poly(acrylonitrile-ethylenepropylene-diene-styrene) (AES), and the like and combinations thereof. In some embodiments, the elastomer-modified graft polymer comprises poly(acrylonitrile-butadiene-styrene) (ABS). The butadiene phase may provide about 5 to about 95 wt.% of the total weight of the ABS impact modifier copolymer, more specifically about 20 to about 90 wt.%, and even more specifically about 40 to about 85 wt.% of the ABS impact modifier, the remainder being the rigid graft phase. In some embodiments, the elastomers phase of the elastomers-modified graft copolymer has a particle size of about 100 nanometers to about 2 micrometers. In some embodiments, the entire elastomers-modified graft copolymer has a particle size of about 100 nanometers to about 2 micrometers.

In some embodiments, the impact modifier composition comprises an elastomer-modified graft polymer and a rigid thermoplastic polymer that is not a polycarbonate. As used herein, the term "rigid thermoplastic polymer" refers to a thermoplastic polymer having a glass transition temperature of at least 20°C, preferably at least 40°C. Suitable rigid thermoplastic polymers include, for example, poly(styrene-acrylonitrile) (SAN), poly(styrene-alpha-methyl styrene-acrylonitrile), poly(methyl methacrylate-acrylonitrile-styrene), poly(methyl methacrylate-styrene), and mixtures thereof. In some embodiments, the elastomer-modified graft polymer comprises poly(acrylonitrile-butadiene-styrene) (ABS), and the rigid thermoplastic polymer comprises poly(styrene-acrylonitrile) (SAN).

Methods of producing elastomer-modified graft copolymers and rigid thermoplastic polymers are known in the art, and many are commercially available. In some embodiments, the impact modifier composition is prepared prior to blending with the polycarbonate. In other embodiments, the impact modifier composition is prepared concurrently with the preparation of the black-colored thermoplastic composition as a whole (for example, the elastomer-modified graft copolymers and rigid thermoplastic polymers can be blended with each other at the same time they are blended with the polycarbonate).

The (not claimed) composition comprises about 5 to about 40 parts by weight of the impact modifier composition, based on 100 parts by weight total of the polycarbonate and the impact modifier composition. Within this range, the impact modifier composition amount can be about 10 to about 35 parts by weight, specifically about 15 to about 30 parts by weight, more specifically about 20 to about 30 parts by weight. When an elastomer-modified graft polymer is present in the impact modifier composition, its amount can be about 5 to about 30 parts by weight, specifically about 10 to about 20 parts by weight, more specifically about 10 to about 15 parts by weight, all based on 100 parts by weight total of the polycarbonate and the impact modifier composition. When a rigid thermoplastic polymer is present in the impact modifier composition, its amount can be about 5 to about 30 parts by weight, specifically about 10 to about 20 parts by weight, more specifically about 10 to about 15 parts by weight, all based on 100 parts by weight total of the polycarbonate and the impact modifier composition.

In some embodiments, the (not claimed) polycarbonate composition comprises about 64 to about 84 parts by weight of the polycarbonate; about 16 to about 36 parts by weight of the impact modifier composition, wherein the impact modifier composition comprises about 8 to about 18 parts by weight of an elastomer-modified graft polymer, and about 8 to about 18 parts by weight of a rigid thermoplastic polymer other than the polycarbonate; and about 0.3 to about 1.5 parts by weight of the carbon black; wherein the elastomer-modified graft polymer comprises poly(acrylonitrile-butadiene-styrene) (ABS); and wherein the rigid thermoplastic polymer comprises poly(styrene-acrylonitrile) (SAN).

A specific (not claimed) polycarbonate composition comprises about 64 to about 84 parts by weight of a polycarbonate; about 16 to about 36 parts by weight of an impact modifier composition comprising about 8 to about 18 parts by weight of a poly(acrylonitrile-butadiene-styrene) (ABS), and about 8 to about 18 parts by weight of a poly(styrene-acrylonitrile) (SAN); and about 0.3 to about 1.5 parts by weight of a carbon black having a heating loss of 3 to about 4 weight percent measured according to ASTM D1509, a volatiles content of 9 to about 30 weight percent measured according to DIN 53552, and a pH of about 2 to about 4 measured according to ASTM D1512; wherein all parts by weight are based on 100 parts by weight total of the polycarbonate, and the impact modifier composition; and wherein the black-colored thermoplastic composition exhibits a CIE lightness value, L*, of 2 to 4 measured at 45° with specular light excluded according to ASTM E308, and a CIE b* value of -1.5 to 0 measured according to ASTM E308.

Another specific (not-claimed) polycarbonate composition consists of about 64 to about 84 parts by weight of a polycarbonate; about 16 to about 36 parts by weight of an impact modifier composition comprising about 8 to about 18 parts by weight of a poly(acrylonitrile-butadiene-styrene) (ABS), and about 8 to about 18 parts by weight of a poly(styrene-acrylonitrile) (SAN); and about 0.3 to about 1.5 parts by weight of a carbon black having a heating loss of 3 to about 4 weight percent measured according to ASTM D1509, a volatiles content of 9 to about 30 weight percent measured according to DIN 53552, and a pH of about 2 to about 4 measured according to ASTM D1512; optionally, up to 5 parts by weight of an additive selected from the group consisting of stabilizers, mold release agents, processing aids, drip retardants, nucleating agents, dyes, pigments, antioxidants, anti-static agents, blowing agents, metal deactivators, antiblocking agents, nanoclays, fragrances, and combinations thereof; wherein all parts by weight are based on 100 parts by weight total of the polycarbonate, and the impact modifier composition; and wherein the black-colored thermoplastic composition exhibits a CIE lightness value, L*, of 2 to 4 measured at 45° with specular light excluded according to ASTM E308, and a CIE b* value of -1.5 to 0 measured according to ASTM E308.

Whether it is a poly(arylene ether) composition or a (not-claimed) polycarbonate composition, the black-colored thermoplastic composition can comprise one or more thermoplastic additives known in the art. Such additives include, for example, stabilizers, mold release agents, processing aids, flame retardants, drip retardants, nucleating agents, dyes, pigments, antioxidants, anti-static agents, blowing agents, metal deactivators, antiblocking agents, nanoclays, fragrances (including fragrance-encapsulated polymers), and the like, and combinations thereof. Additives can be added in amounts that do not unacceptably detract from the desired performance and physical properties of the composition. Such amounts can be determined by a skilled artisan without undue experimentation. One additive class of interest is carbon black dispersing aids. Carbon black dispersing aids typically comprise a long chain alkyl or alkenyl group and include, for example, polyalkylene waxes; Fischer-Tropsch waxes (produced by coal gasification); vegetable waxes such as carnauba wax, Japan wax, Bayberry wax, rice wax, sugar cane wax, candelilla wax, tallow, and jojoba oil; animal wax such as beeswax, Shellac wax, Spermaceti wax, whale wax, Chinese wax, and lanolin; ester wax; saturated fatty acid amides wax such as capronamide, caprylamide, pelargonic amide, capric amide, laurylamide, tridecanoic amide, myristylamide, stearamide, behenic amide, and ethylene bis(stearamide); unsaturated fatty acid amides wax such as caproleic amide, myristoleic amide, oleamide, elaidic amide, linoleic amide, erucamide, ricinoleic amide, and linolenic amide; mineral waxes such as montan wax, ozokerite, ceresin, and lignite wax; synthetic waxes such as polytetrafluoroethylene wax, Akura wax, and distearyl ketone; hydrogenated waxes such as castor wax and opal wax; and modified waxes such as montan wax derivatives, paraffin wax derivatives, and microcrystalline wax derivatives; and the like; and combinations thereof. Surprisingly, the present inventors have observed that the desired deep black color can be obtained without using a carbon black dispersant. Thus, in some embodiments, the black-colored thermoplastic composition comprises less than or equal to 1 weight percent of a dispersing aid for the carbon black. Although pentaerythritol tetrastearate is usually regarded as a mold release agent rather than a carbon black dispersing aid, it shall be considered a dispersing aid for the purpose of calculating the weight percent dispersing aid in the composition. As demonstrated in the working examples below, when pentaerythritol tetrastearate is present in the composition at as little as 0.5 weight percent, the use of an additional dispersing aid does not appear to improve the color properties of the composition.

In some embodiments, the black-colored thermoplastic composition excludes components other than those taught herein as required or optional. For example, in some embodiments, the black-colored thermoplastic composition excludes any polymers other than those taught herein as required or optional. As another example, in some embodiments, the black-colored thermoplastic composition excludes fillers.

Other embodiments include methods of preparing the black-colored thermoplastic compositions. Thus, one embodiment is a method of preparing a black-colored thermoplastic composition, comprising: melt-kneading 20 to 80 parts by weight of a poly(arylene ether), 20 to 80 parts by weight of a styrenic polymer, and 0.1 to 2 parts by weight of a carbon black having a heating loss of at least 3 weight percent, wherein the heating loss is measured after 30 minutes at 125°C and determined according to ASTM D1509-95, and a volatiles content of at least 5 weight percent measured according to DIN 53552 to form a black-colored thermoplastic composition; wherein all parts by weight are based on 100 parts by weight total of the poly(arylene ether) and the styrenic polymer; and wherein the black-colored thermoplastic composition exhibits a CIE lightness value of CIE 1976, L*, less than or equal to 5 measured according to ASTM E308-06 using an angle of 45° with specular light excluded. The composition can, optionally, be prepared from a so-called masterbatch of the carbon black. Thus, in some embodiments, the carbon black is provided as a masterbatch comprising 1 to 30 weight percent carbon black and 70 to 99 weight percent of a carrier selected from the group consisting of a styrenic polymer, a blend of a poly(arylene ether) and a styrenic polymer, and a blend of a poly(arylene ether) and a styrenic polymer and an additive, wherein the weight percent carbon black and the weight percent carrier are based on the total weight of the masterbatch. Methods of preparing pigment masterbatches are known in the art. For example, a masterbatch can be prepared by melt-kneading the carbon black and the styrenic polymer in an extruder.

Another embodiment is a method of preparing a black-colored thermoplastic composition, comprising: melt-kneading 30 to 50 parts by weight of a poly(arylene ether), 15 to 35 parts by weight of a rubber-modified polystyrene, 25 to 45 parts by weight of a homopolystyrene, and 0.3 to 1.5 parts by weight of a carbon black having a heating loss of 3 to 4 weight percent, wherein the heating loss is measured after 30 minutes at 125°C and determined according to ASTM D1509-95, a volatiles content of 9 to 30 weight percent measured according to DIN 53552, and a pH of 2 to 4 measured according to ASTM D1512 to form a black-colored thermoplastic composition; wherein all parts by weight are based on 100 parts by weight total of the poly(arylene ether), the rubber-modified polystyrene, and the homopolystyrene; and wherein the black-colored thermoplastic composition exhibits a CIE lightness value of CIE 1976, L*, of 2 to 4 measured at 45° with specular light excluded according to ASTM E308-06 and a CIE 1976 b* value of -1.5 to 0 measured according to ASTM E308-06. A carbon black masterbatch may also be used in this embodiment.

There is described a not-claimed method of preparing a black-colored thermoplastic composition, comprising: melt-kneading about 60 to about 95 parts by weight of a polycarbonate, about 5 to about 40 parts by weight of an impact modifier composition, and about 0.1 to about 2 parts by weight of a carbon black having a heating loss of at least 3 weight percent measured according to ASTM D1509, and a volatiles content of at least 5 weight percent measured according to DIN 53552 to form a black-colored thermoplastic composition; wherein all parts by weight are based on 100 parts by weight total of the polycarbonate and the impact modifier composition; and wherein the black-colored thermoplastic composition exhibits a CIE lightness value, L*, less than or equal to 5 measured according to ASTM E308 using an angle of 45° with specular light excluded. In this embodiment, the carbon black can, optionally, be provided as a masterbatch comprising about 1 to about 30 weight percent carbon black and about 70 to about 99 weight percent of a carrier selected from the group consisting of a polycarbonate, a blend of a polycarbonate and an impact modifier composition, and a blend of a polycarbonate and an impact modifier composition and an additive, wherein the weight percent of the carbon black and the weight percent of the carrier are based on the total weight of the masterbatch.

There is also described a not-claimed method of preparing a black-colored thermoplastic composition, comprising: melt-kneading about 64 to about 84 parts by weight of a polycarbonate, about 16 to about 36 parts by weight of an impact modifier composition comprising about 8 to about 18 parts by weight of a poly(acrylonitrile-butadiene-styrene) (ABS), and about 8 to about 18 parts by weight of a poly(styrene-acrylonitrile) (SAN), and about 0.3 to about 1.5 parts by weight of a carbon black having a heating loss of 3 to about 4 weight percent measured according to ASTM D 1509, a volatiles content of 9 to about 30 weight percent measured according to DIN 53552, and a pH of about 2 to about 4 measured according to ASTM D1512 to form a black-colored thermoplastic composition; wherein all parts by weight are based on 100 parts by weight total of the polycarbonate and the impact modifier composition; and wherein the black-colored thermoplastic composition exhibits a CIE lightness value, L*, of 2 to 4 measured at 45° with specular light excluded according to ASTM E308, and a CIE b* value of -1.5 to 0 measured according to ASTM E308. A carbon black masterbatch may also be used in this embodiment.

One embodiment is an article comprising any of the above-described black-colored thermoplastic compositions. The black-colored thermoplastic compositions are particularly useful for the fabrication of automotive interior parts, and electronic equipment including consumer electronics and particularly television bezels.

The invention is further illustrated by the following non-limiting examples.

### MATERIALS

The thermoplastic compositions described in the following working examples were prepared from the individual components described in Table 1. Carbon black properties mentioned in the "Description" column of Table 1 were measured as follows. Values of pH were determined according to ASTM D1512-95, "Standard Test Methods for Carbon Black - pH Value". Values of heating loss after 30 minutes at 125°C, expressed in weight percent, were determined according to ASTM D1509-95, "Standard Test Methods for Carbon Black - Heating Loss". Values of CIE 1976 L* were computed according to ASTM E308-06, "Standard Practice for Computing the Colors of Objects by Using the CIE System" using samples containing carbon black amounts of 0.5 parts per hundred resin (pph) in a resin composition consisting of 38.91 parts by weight poly(arylene ether), 24.75 parts by weight rubber-modified polystyrene, 0.392 part by weight tridecyl phosphite, 0.995 part by weight pentaerythritol tetrastearate, and 34.95 parts by weight homopolystyrene (see a representative composition in Example 6, below). Values of percent sulfur, expressed in weight percent, were measured according to ASTM D1619-99, "Standard Test Methods for Carbon Black - Sulfur Content". Values of iodine absorption number, expressed in grams per kilogram, were measured according to ASTM D1510-02a, "Standard Test Methods for Carbon Black - Iodine Absorption Number". Values of Toluene Discoloration Number, expressed in percent transmittance, were measured according to ASTM D1618-99, "Standard Test Method for Carbon Black Extractables - Transmittance of Toluene Extract". Values of Solvent Extractables, expressed in weight percent, were measured according to ASTM D4527-99, "Standard Test Method for Carbon Black - Solvent Extractables". Values of Volatile Constituents, expressed in weight percent, were measured according to DIN 53 552, "Testing of Carbon Black - Determination of the Amount of Components of Carbon Black that are Volatile on Heating".

**Table 1**

| Component | Supplier, Grade | Description |
|---|---|---|
| PPE, 0.40 dL/g | GE Plastics, PPO 640 | Poly(2,6-dimethyl-1,4-phenylene ether) having an intrinsic viscosity of 0.40 deciliter per gram measured at 25°C in chloroform |
| HIPS | Chevron, D7022.27 | High-gloss rubber-modified polystyrene (high-impact polystyrene) having a polystyrene content of 91.8 weight percent and a polybutadiene content of 8.2 weight percent |
| Homopolystyrene | Chevron, EB3300 | Homopolystyrene having a number average molecular weight of about 52,000 atomic mass units |
| High-flow PC | GE Plastics, LEXAN ML5221 | Bisphenol A polycarbonate having a melt flow rate (MFR) of 23.5-28.5 grams/10 minutes measured at 300°C and 1.2 kilograms load |
| Low-flow PC | GE Plastics, LEXAN 105-111N | Bisphenol A polycarbonate having a melt volume rate (MFR) of 5.1-6.9 grams/10 minutes measured at 300°C and 1.2 kilograms load |
| PEC | GE Plastics, LEXAN 4701R-1100-1 | Polyestercarbonate resin having a melt volume rate (MVR) of about 6 centimeters³/10 minutes measured at 300°C and 5 kilograms load |
| PET | DAK Resins, Lazer+ C | Poly(ethylene terephthalate) having an intrinsic viscosity of about 0.83 deciliter per gram measured at 30°C according to ASTM D4603-03 |
| PBT | GE Plastics, VALOX 315 | Poly(butylene terephthalate) having a number average molecular weight of about 50,000 atomic mass units |
| SAN | GE Plastics, SAN 581 | Poly(styrene-co-acrylonitrile) having a polystyrene content of 75 weight percent and a polyacrylonitrile content of 25 weight percent |
| ABS | GE Plastics | High rubber graft emulsion polymerized poly(acrylonitrile-co-butadiene-co-styrene) comprising 15-35 weight percent polyacrylonitrile and 85-65 weight percent polystyrene grafted on to a core of 85-100 weight percent polybutadiene and with a 15-0 weight percent styrene; the core represents 25-75 % of the total emulsion ABS; the materials are crosslinked to a density of 43-55% as measured by sol-gel fraction. |
| AMSAN | GE Plastics | Poly(alpha-methylstyrene-co-acrylonitrile) having a number average molecular weight of about 75,000 atomic mass units; about 65-70 weight percent poly(alpha-methylstyrene), and about 30-35 weight percent polyacrylonitrile |
| MMASAN | GE Plastics | Poly(methyl methacrylate-co-styrene-co-acrylonitrile) having a weight average molecular weight of about 120,000 atomic mass units; about 30-35 weight percent poly(methyl methacrylate), about 35-40 weight percent polystyrene, and about 20-25 weight percent polyacrylonitrile |
| ASA 1 | GE Plastics, GELOY C652270 | Poly(acrylonitrile-co-styrene-co-methyl methacrylate) having a nominal particle size of 110 nanometers, and about 45 weight percent polyacrylonitrile |
| ASA 2 | GE Plastics, GELOY C652272 | Poly(acrylonitrile-co-styrene-co-methyl methacrylate) having a nominal particle size of 500 nanometers, and about 45 weight percent polyacrylonitrile |
| MBS | Rohm & Haas, EXL-3691 pellets | A core-shell polymer having a core polymerized from butadiene, styrene, methyl methacrylate, and divinylbenzene, a second stage or shell polymerized from styrene, and a third stage or outer shell polymerized from methyl methacrylate and 1,3-butylene glycol dimethacrylate. |
| TDP | Dover Chemical Company, Doverphos 6 | Tridecyl phosphite |
| PETS | Lonza, Glycolube | Pentaerythritol tetrastearate |
| Antioxidant 1 | Everspring, Evemox 76 | Octadecyl 3-(3,5-di-*tert*-butyl-4-hydroxyphenyl)propionate |
| Antioxidant 2 | Haruno Sangyo Kaisha/Shipro, Seenox 412S | Pentaerythritol tetrakis(3-dodecylthiopropionate) |
| Antioxidant 3 | Everspring, Evemox 10 | Pentaerythritol tetrakis(3-(3,5-di-*tert*-butyl-4-hydroxyphenyl)propionate) |
| Phosphonite stabilizer | Clariant, Sandostab PEPQ Powder | Aryl phosphonite |
| Phosphite stabilizer | Everspring, Everfox 168 | Tris(2,4-di-*tert*-butylphenyl)phosphite |
| Epoxy | Dow Chemical Company, ERL-4221 | Cycloaliphatic epoxy resin |
| H₃PO₃, 45% | Ulrich Chemical Company | Phosphorous acid, 45% in water |
| Benzotriazole UV stabilizer | Cytec, CYASORB UV5411 Powder | 2-(2'-Hydroxy-5'-*tert*-octylphenyl)-benzotriazole |
| HALS | Ciba Specialty Chemicals, TINUVIN 770DF | Hindered amine light stabilizer, bis(2,2,6,6-tetramethyl-4-piperidinyl)sebacate |
| PDMS | Momentive Performance Materials, SF96-1000 | Poly(dimethylsiloxane) having a viscosity of about 1,000 centipoise at 25°C |
| EBS | Lonza, Acrawax C | Ethylene bis(stearamide) |
| Red dye | Lanxess, Macrolex Red EG | Solvent Red 135 |
| Green dye | Farbtex, Green 5B | Solvent Green 3 |
| CB Monarch 800 | Cabot, Monarch 800 | Carbon black with pH = 7.85; heating loss = 1.87 weight percent; L* at 0.5 pph loading = 4.509; sulfur = 0.45 weight percent; iodine absorption = 230.8 grams/kilogram; toluene discoloration number = 99.5 percent transmittance; solvent extractables = 0.01 weight percent; volatile constituents = 1.85 weight percent |
| CB Printex F80. | Degussa, Printex F80 | Carbon black with pH = 7.55; heating loss = 2.67 weight percent; L* at 0.5 pph loading = 5.737; sulfur = 0.32 weight percent; iodine absorption = 232.2 grams/kilogram; toluene discoloration number = 97.1 percent transmittance; solvent extractables = 0.01 weight percent; volatile constituents = 2.96 weight percent |
| CB BP480 | Cabot, Black Pearls 480 | Carbon black with pH = 6.95; heating loss = 1.99 weight percent; L* at 0.5 pph loading = 6.439; sulfur = 1.13 weight percent; iodine absorption = 86.7 grams/kilogram; toluene discoloration number = 94.8 percent transmittance; solvent extractables = 0.06 weight percent; volatile constituents = 2.44 weight percent |
| CB BP880 | Cabot, Black Pearls 880 | Carbon black with pH = 7.25; heating loss = 1.8 weight percent; L* at 0.5 pph loading = 3.822; volatile constituents = 2.5 weight percent |
| CB BP1000 | Cabot, Black Pearls 1000 | Carbon black with pH = 6.1; heating loss = 3.14 weight percent; L* at 0.5 pph loading = 3.362; volatile constituents = 10.44 weight percent |
| CB BP1100 | Cabot, Black Pearls 1100 | Carbon black with pH = 2.3; heating loss = 0.8 weight percent; L* at 0.5 pph loading = 5.825; volatile constituents = 2.49 weight percent |
| CB Vulcan 9A32 | Cabot, Vulcan 9A32 | Carbon black with L* at 0.5 pph loading = 6.07; iodine absorption = 142 grams/kilogram; density = 352 kilogram/meter³ |
| CB FW 200 | Degussa, FW 200 | Carbon black with pH = 2.05; heating loss = 3.51 weight percent; L* at 0.5 pph loading = 2.429; sulfur = 0.34 weight percent; iodine absorption = 236.8 grams/kilogram; toluene discoloration number = 100 percent transmittance; solvent extractables = 0.02 weight percent; volatile constituents = 22.36 weight percent |

### EXAMPLES 1 AND 2, COMPARATIVE EXAMPLES 1 AND 2

These examples illustrate variations in color properties as a function of resin type when carbon black type is held constant. The resin types were a poly(arylene ether)/styrenic polymer blend (PPE/PS), a polycarbonate/poly(acrylonitrile-co-butadiene-co-styrene) blend (PC/ABS), a polycarbonate/polyestercarbonate/poly(butylene terephthalate)/poly(ethylene terephthalate) blend (PC/PEC/PBT/PET), and an poly(acrylonitrile-*co*-styrene-*co-*acrylate)/poly(alpha-methylstyrene-*co*-acrylonitrile)/poly(methyl methacrylate-*co-*styrene-co-acrylonitrile) blend (ASA/AMSAN/MMASAN). Compositions are detailed in Table 2. The carbon black, which was obtained as FW 200 from Degussa, is described in Degussa U.S. Patent No. 6,471,763 to Karl as a channel black that is the product of oxidation with nitrogen dioxide and that has a volatiles content of 24.0 weight percent and a settling rate of 0.5 centimeters after 15 minutes. Independently measured properties of this carbon black are given in Table 1, above.

Prior to melt kneading, all components were dry blended using a paint shaker for two cycles of three minutes each for a total of six minutes. Compounding was conducted with a Prism co-rotating twin-screw extruder having a 24-millimeter screw diameter. An extruder screw speed of 600 rotations per minute (rpm) was used. The extrusion temperature profile was 27 - 50 - 241 - 271 - 288 - 304 - 304 - 304°C (80 - 50 - 465 - 520 - 550 - 580 - 580 - 580°F) from the most upstream heating zone to the die, respectively. The measured torque was 75%.

After blending and extrusion, color chips measuring 5.08 centimeters x 7.62 centimeters (2 x 3 inches) were injection molded using a barrel temperature of 293°C (560 °F) and a tool temperature of 85°C (185°F). Color properties are given in Table 2. Color measurements, CIE 1976 L*, a*, and b*, were computed according to ASTM E308-06 "Standard Practice for Computing the Colors of Objects by Using the CIE System". Data used in the color computations were obtained on a Gretag MacBeth model CE-740GL goniospectrophotometer conforming to ASTM E167, using an angle of 45° with specular light excluded.

The color data in Table 2 show that compositions exhibiting L* values less than 4 were obtained with the PPE/PS (Example 1) and PC/ABS (composition not claimed; Example 2), but not with PC/PEC/PBT/PET (Comparative Example 1) or ASA/AMSAN/MMASAN (Comparative Example 2).

**Table 2**

| | Ex. 1 | Ex. 2 (not-claimed composition) | C. Ex. 1 | C. Ex. 2 |
|---|---|---|---|---|
| Compositions | | | | |
| PPE, 0.40 dL/g | 38.34 | -- | -- | -- |
| HIPS | 24.39 | - | -- | -- |
| TDP | 0.39 | -- | -- | -- |
| PETS | 0.98 | 0.15 | 0.49 | -- |
| Homopolystyrene | 34.43 | -- | -- | -- |
| High-flow PC | -- | 47.28 | 46.16 | -- |
| Low-flow PC | -- | 25.46 | 9.85 | -- |
| SAN | -- | 12.78 | -- | -- |
| ABS | -- | 12.78 | -- | -- |
| Antioxidant 1 | -- | 0.08 | -- | 0.19 |
| PEC | -- | -- | 9.85 | -- |
| Antioxidant 2 | -- | -- | 0.05 | -- |
| Antioxidant 3 | -- | -- | 0.15 | -- |
| Phosphonite stabilizer | -- | -- | 0.10 | -- |
| Epoxy | -- | -- | 0.05 | -- |
| H₃PO₃, 45% | -- | -- | 0.05 | -- |
| MBS | -- | -- | 6.90 | - |
| PET | -- | -- | 19.70 | -- |
| PBT | -- | -- | 4.93 | -- |
| Benzotriazole UV stabilizer | -- | -- | 0.25 | 0.48 |
| AMSAN | -- | -- | -- | 38.60 |
| MMASAN | -- | -- | -- | 14.47 |
| ASA 1 | -- | -- | -- | 31.84 |
| ASA 2 | -- | -- | -- | 11.58 |
| Phosphite stabilizer | -- | -- | -- | 0.19 |
| HALS | -- | -- | -- | 0.58 |
| PDMS | -- | -- | -- | 0.10 |
| EBS | -- | -- | -- | 0.48 |
| CB FW 200 | 1.48 | 1.48 | 1.48 | 1.48 |

| Properties | | | | |
|---|---|---|---|---|
| L* at 45° | 3.45 | 3.48 | 6.24 | 6.39 |
| a* at 45° | -0.01 | 0.20 | 0.43 | -0.32 |
| b* at 45° | -1.34 | -0.81 | 1.10 | -4.40 |

### COMPARATIVE EXAMPLES 3-10

These examples illustrate the effects of resin type and carbon black type on color properties. Data from Examples 1 and 2 and Comparative Examples 1 and 2 are repeated in Table 3. These examples all used Degussa FW 200 carbon black. Comparative Examples 3, 5, 7, and 9 used Cabot Monarch 800, and Comparative Examples 4, 6, 8, and 10 used Degussa Printex F80. Note that Degussa Printex F80 is specifically sold as a high color carbon black. Color data, presented in Table 3, show that the PPE/PS and the (not claimed) PC/ABS compositions exhibit L* values less than 4 only with the Degussa FW 200 carbon black. For the PC/PEC/PET/PBT composition, the lowest L* value was again observed with Degussa FW 200, but the L* value was 6.24 (Comparative Example 1). For the ASA/AMSAN/MMASAN composition, the highest L* value was observed with Degussa FW 200 (Comparative Example 2), and all three samples exhibited L* values of at least 5.877. These results show that there are unpredictable interactions between the resin types and carbon black types, and that the specific combination of a carbon black having a heating loss of at least 3 weight percent and a volatiles content of at least 5 weight percent and a poly(arylene ether)/styrenic polymer or polycarbonate/impact-modifier composition produces very low L* values.

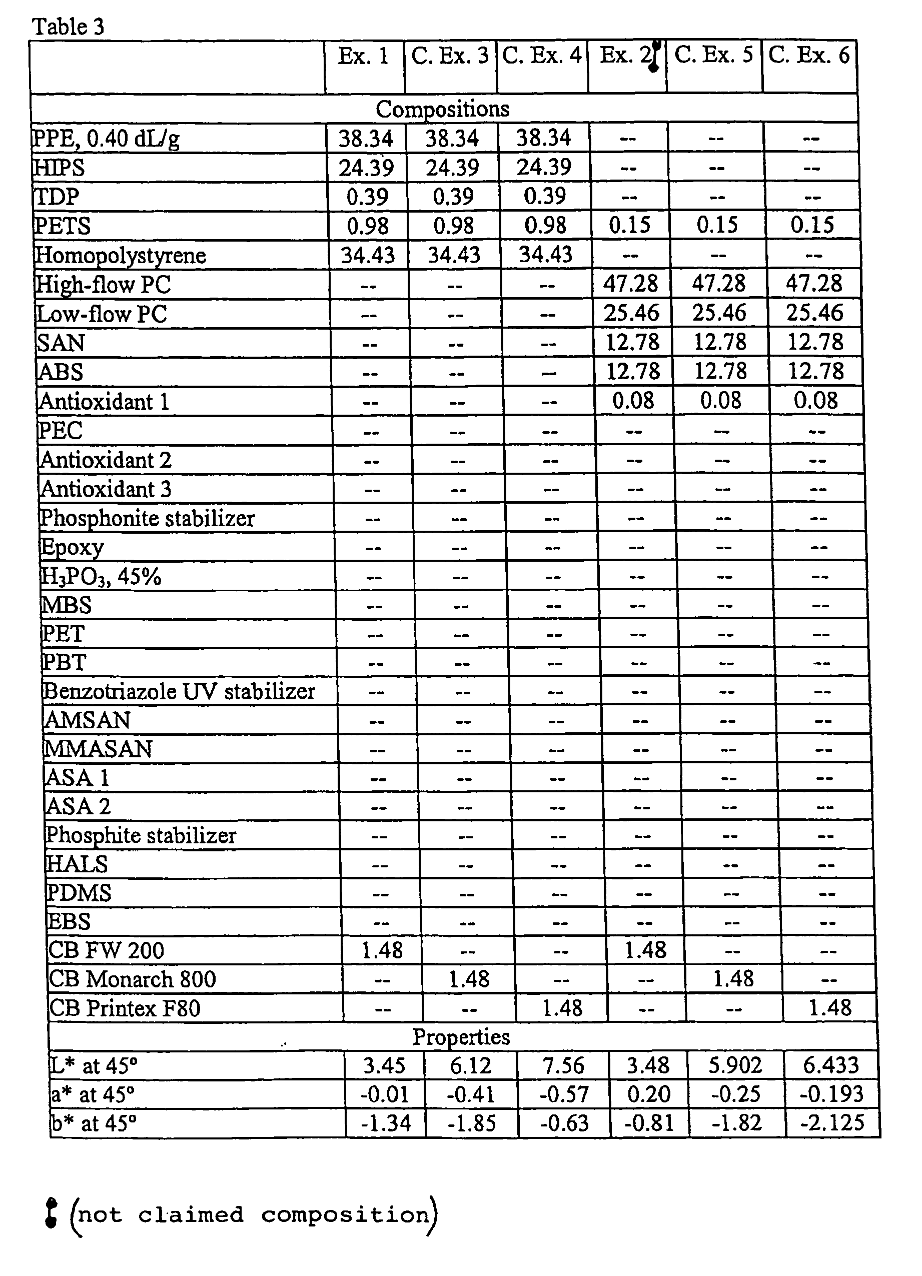

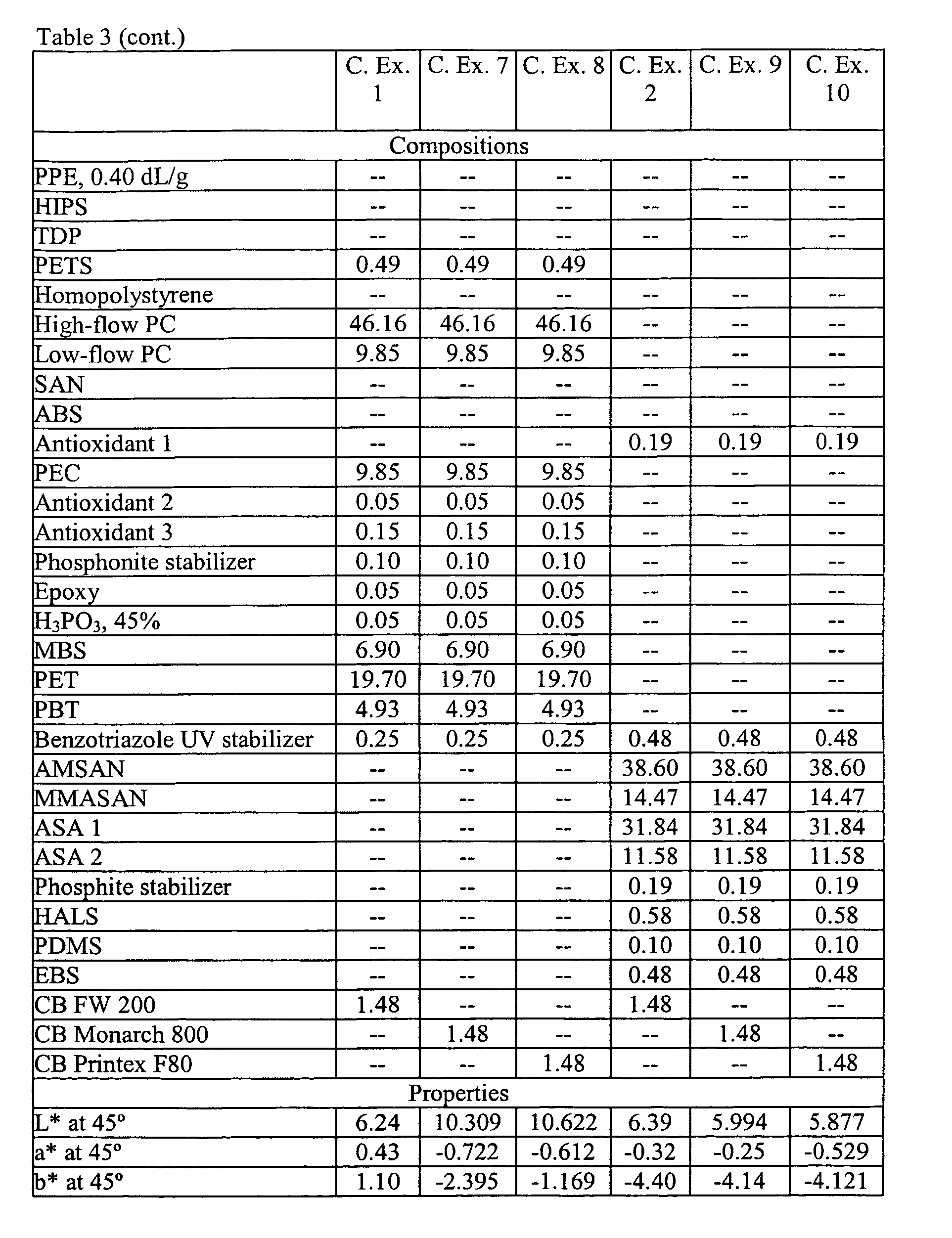

### EXAMPLES 3-5, COMPARATIVE EXAMPLES 11-13

These examples illustrate the effects of carbon black type and amount, and carbon black dispersing aid amount in a PPE/PS blend. The carbon blacks were Degussa FW 200 and Cabot Monarch 800. The carbon black dispersing aid was ethylene bis(stearamide). All compositions included 0.5 parts by weight of the mold release agent pentaerythritol tetrastearate. Compositions and color properties are provided in Table 4.

The results for Examples 3-5 show that the use of the oxidized channel black, Degussa FW 200, is associated with lower L* and b* values than those observed for corresponding compositions using the furnace black Cabot Monarch 800. Although an improvement in color (more blue-toned black, indicated by the lower b* value) was seen when using the ethylene bis(stearamide) was used in combination with the Cabot Monarch 800 (Comparative Example 15 versus Comparative Example 13), no such improvement was found with Degussa FW 200 (Example 15 versus Example 13). This demonstrates an additional benefit of using the oxidatively treated carbon black in a poly(arylene ether)/styrenic polymer blend, namely that the desirable blue-toned black is available without the use of a dispersion aid. Although it is not clear whether the mold release agent pentaerythritol tetrastearate is functioning in part as a dispersing aid, it is clear that the addition of the conventional dispersing aid ethylene bis(stearamide) provides no color benefit to the composition containing the oxidatively treated carbon black and 0.5 parts by weight pentaerythritol tetrastearate.

**Table 4**

| | Ex. 3 | C. Ex. 11 | Ex.4 | C. Ex. 12 | Ex. 5 | C. Ex. 13 |
|---|---|---|---|---|---|---|
| Compositions | | | | | | |
| PPE, 0.40 dL/g | 39.30 | 39.30 | 39.30 | 39.30 | 39.30 | 39.30 |
| HIPS | 25.00 | 25.00 | 25.00 | 25.00 | 25.00 | 25.00 |
| TDP | 0.40 | 0.40 | 0.40 | 0.40 | 0.40 | 0.40 |
| PETS | 0.50 | 0.50 | 0.50 | 0.50 | 0.50 | 0.50 |
| Homopolystyrene | 35.30 | 35.30 | 35.30 | 35.30 | 35.30 | 35.30 |
| Red dye | 0.50 | 0.50 | 0.50 | 0.50 | 0.50 | 0.50 |
| Green dye | 0.50 | 0.50 | 0.50 | 0.50 | 0.50 | 0.50 |
| CB FW 200 | 1.50 | -- | 3.00 | -- | 1.50 | -- |
| CB Monarch 800 | -- | 1.50 | -- | 3.00 | -- | 1.50 |
| EBS | -- | -- | -- | -- | 1.00 | 1.00 |

| Properties | | | | | | |
|---|---|---|---|---|---|---|
| L* at 45° | 3.98 | 5.87 | 4.10 | 6.35 | 4.28 | 5.82 |
| b* at 45° | -1.31 | -1.26 | -1.18 | -0.74 | -1.32 | -1.62 |

### EXAMPLES 6-8, COMPARATIVE EXAMPLES 14-19

These examples further illustrate the effect of carbon black type on color properties of a poly(arylene ether)/styrenic polymer blend. Compositions and color properties are given in Table 5, where Example 7 is a repeat of Example 6. The results show that the carbon black types that are associated with the lowest L* values are Degussa FW 200 and Cabot Black Pearls 1000.

**Table 5**

| | Ex. 6 | Ex. 7 | Ex. 8 | C. Ex. 14 | C. Ex. 15 | C. Ex. 16 | C. Ex. 17 | C. Ex. 18 | C. Ex. 19 |
|---|---|---|---|---|---|---|---|---|---|
| Compositions | | | | | | | | | |
| PPE, 0.40 dL/g | 38.72 | 38.72 | 38.72 | 38.72 | 38.72 | 38.72 | 38.72 | 38.72 | 38.72 |
| HIPS | 24.63 | 24.63 | 24.63 | 24.63 | 24.63 | 24.63 | 24.63 | 24.63 | 24.63 |
| TDP | 0.39 | 0.39 | 0.39 | 0.39 | 0.39 | 0.39 | 0.39 | 0.39 | 0.39 |
| PETS | 0.99 | 0.99 | 0.99 | 0.99 | 0.99 | 0.99 | 0.99 | 0.99 | 0.99 |
| Homopolystyrene | 34.78 | 34.78 | 34.78 | 34.78 | 34.78 | 34.78 | 34.78 | 34.78 | 34.78 |
| CB BP480 | -- | -- | -- | 0.49 | -- | -- | -- | -- | -- |
| CB Vulcan 9A32 | -- | -- | -- | -- | 0.49 | -- | -- | -- | -- |
| CB Monarch 800 | -- | -- | -- | -- | -- | 0.49 | -- | -- | -- |
| CB BP880 | -- | -- | -- | -- | -- | -- | 0.49 | -- | -- |
| CB Printex F80 | -- | -- | -- | -- | -- | -- | -- | 0.49 | -- |
| CB FW 200 | 0.49 | 0.49 | -- | -- | -- | -- | -- | -- | -- |
| CB BP1000 | -- | -- | 0.49 | -- | -- | -- | -- | -- | -- |
| CB BP1100 | -- | -- | -- | -- | -- | -- | -- | -- | 0.49 |

| Properties | | | | | | | | | |
|---|---|---|---|---|---|---|---|---|---|
| L* value at 45 deg | 2.54 | 2.32 | 3.36 | 6.44 | 6.06 | 4.51 | 3.82 | 5.74 | 5.83 |

The properties of the carbon blacks included in Table 1 were analyzed to determine what special characteristics of Degussa FW 200 and Cabot Black Pearls 1000 were responsible for the unexpectedly good performance in PPE/PS and PC/ABS blends. This analysis showed that at least two properties are associated with low L* values: heating loss and volatile constituents. Specifically, the desirable low L* values are associated with high values for heating loss and volatile constituents.

This written description uses examples to disclose the invention, including the best mode, and also to enable any person skilled in the art to make and use the invention. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

All ranges disclosed herein are inclusive of the endpoints, and the endpoints are independently combinable with each other.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one element from another. The modifier "about" used in connection with a quantity is inclusive of the stated value and has the meaning dictated by the context (e.g., it includes the degree of error associated with measurement of the particular quantity).

## Claims

1. A black-colored thermoplastic composition, comprising:
20 to 80 parts by weight of a poly(arylene ether);
20 to 80 parts by weight of a styrenic polymer; and
0.1 to 2 parts by weight of a carbon black having
a heating loss of at least 3 weight percent, wherein the heating loss is measured after 30 minutes at 125°C and determined according to ASTM D1509-95, and
a volatiles content of at least 5 weight percent measured according to DIN 53552;
wherein all parts by weight are based on 100 parts by weight total of the poly(arylene ether) and the styrenic polymer; and
wherein the black-colored thermoplastic composition exhibits a CIE lightness value of CIE 1976, L*, less than or equal to 5 measured according to ASTM E308-06 using an angle of 45° with specular light excluded.

2. The black-colored thermoplastic composition of any of Claim 1, wherein the carbon black has a volatiles content of 5 to 30 weight percent.

3. The black-colored thermoplastic composition of Claim 1 or 2, wherein the carbon black has a pH of 2 to 4 measured according to ASTM D1512.

4. The black-colored thermoplastic composition of any of Claims 1 - 3, wherein the carbon black is the product of a process comprising oxidative aftertreatment.

5. The black-colored thermoplastic composition of any of Claims 1 - 4, wherein the carbon black is the product of a process comprising oxidative aftertreatment with nitrogen dioxide.

6. The black-colored thermoplastic composition of any of Claims 1 - 5, wherein the carbon black has a cetyltrimethylammonium bromide surface area of 400 to 600 meter²/gram measured according to ASTM D3765.

7. The black-colored thermoplastic composition of any of Claims 1 - 6, wherein the carbon black has an iodine absorption of 200 to 300 milligrams/gram measured according to ASTM D1510.

8. The black-colored thermoplastic composition of any of Claims 1 - 7, comprising 30 to 50 parts by weight of the poly(arylene ether), 40 to 80 parts by weight of the styrenic polymer, and 0.3 to 1.5 parts by weight of the carbon black; wherein the styrenic polymer comprises a rubber-modified polystyrene and a homopolystyrene.

9. The black-colored thermoplastic composition of Claim 8, comprising:
15 to 35 parts by weight of the rubber-modified polystyrene;
25 to 45 parts by weight of the homopolystyrene; and
wherein the carbon black has
a heating loss of 3 to 4 weight percent, wherein the heating loss is measured after 30 minutes at 125°C and determined according to ASTM D1509-95,
a volatiles content of 9 to 30 weight percent measured according to DIN 53552,and
a pH of 2 to 4 measured according to ASTM D 1512.

10. The black-colored thermoplastic composition of any of Claims 1 - 9, wherein the composition comprises less than or equal to 1 weight percent of a dispersing aid for the carbon black.

11. An article comprising the black-colored thermoplastic composition of any of Claims 1 - 10.

12. A method of preparing a black-colored thermoplastic composition, comprising:
melt-kneading
20 to 80 parts by weight of a poly(arylene ether),
20 to 80 parts by weight of a styrenic polymer, and
0.1 to 2 parts by weight of a carbon black having
a heating loss of at least 3 weight percent, wherein the heating loss is measured after 30 minutes at 125°C and determined according to ASTM D1509-95, and
a volatiles content of at least 5 weight percent measured according to DIN 53552
to form a black-colored thermoplastic composition;
wherein all parts by weight are based on 100 parts by weight total of the poly(arylene ether) and the styrenic polymer; and
wherein the black-colored thermoplastic composition exhibits a CIE lightness value of CIE 1976, L*, less than or equal to 5 measured according to ASTM E308-06 using an angle of 45° with specular light excluded.

13. The method of Claim 12, wherein the carbon black is provided as a masterbatch comprising 1 to 30 weight percent carbon black and 70 to 99 weight percent of a carrier selected from the group consisting of a styrenic polymer, a blend of a poly(arylene ether) and a styrenic polymer, and a blend of a poly(arylene ether) and a styrenic polymer and an additive, wherein the weight percent carbon black and the weight percent carrier are based on the total weight of the masterbatch.

14. The method of Claim 12 or 13, wherein the styrenic polymer comprises a rubber-modified polystyrene and a homopolystyrene, and comprising:
melt-kneading
30 to 50 parts by weight of poly(arylene ether),
15 to 35 parts by weight of rubber-modified polystyrene,
25 to 45 parts by weight of homo polystyrene, and
0.3 to t 1.5 parts by weight of carbon black having
a heating loss of 3 to 4 weight percent, wherein the heating loss is measured after 30 minutes at 125°C and determined according to ASTM D 1509-95, and
a volatiles content of 9 to 30 weight percent measured according to DIN 53552 and
a pH of 2 to 4 measured according to ASTM D1512
to form the black-colored thermoplastic composition; and
wherein the black-colored thermoplastic composition exhibits a CIE lightness value of CIE 1976, L *, of 2 to 4 measured at 45° with specular light excluded according to ASTM E308-06, and
a CIE 1976 b* value of -1.5 to 0 measured according to ASTM E308-06.

## Patentansprüche

1. Schwarz gefärbte thermoplastische Zusammensetzung, umfassend:
20 bis 80 Gewichtsteile eines Poly(arylenethers);
20 bis 80 Gewichtsteile eines Styrolpolymers; und
0,1 bis 2 Gewichtsteile eines Rußes mit
einem Wärmeverlust von mindestens 3 Gewichtsprozent, wobei der Wärmeverlust nach 30 Minuten bei 125°C gemessen und gemäß ASTM D1509-95 bestimmt wird, und
einem gemäß DIN 53552 gemessenen Gehalt an flüchtigen Bestandteilen von mindestens 5 Gewichtsprozent;
wobei sämtliche Gewichtsteile auf 100 Gesamtgewichtsteilen des Poly(arylenethers) und des Styrolpolymers basieren; und
wobei die schwarz gefärbte thermoplastische Zusammensetzung einen gemäß ASTM E308-06 unter Verwendung eines Winkels von 45° unter Ausschluss von spiegelndem Licht gemessenen CIE-Helligkeitswert von CIE 1976 L* von weniger als oder gleich 5 aufweist.

2. Schwarz gefärbte thermoplastische Zusammensetzung nach einem von Anspruch 1, wobei der Ruß einen Gehalt an flüchtigen Bestandteilen von 5 bis 30 Gewichtsprozent aufweist.

3. Schwarz gefärbte thermoplastische Zusammensetzung nach Anspruch 1 oder 2, wobei der Ruß einen gemäß ASTM D1512 gemessenen pH-Wert von 2 bis 4 aufweist.

4. Schwarz gefärbte thermoplastische Zusammensetzung nach einem der Ansprüche 1-3, wobei der Ruß das Produkt eines Verfahrens ist, das oxidative Nachbehandlung umfasst.

5. Schwarz gefärbte thermoplastische Zusammensetzung nach einem der Ansprüche 1-4, wobei der Ruß das Produkt eines Verfahrens ist, das oxidative Nachbehandlung mit Stickstoffdioxid umfasst.

6. Schwarz gefärbte thermoplastische Zusammensetzung nach einem der Ansprüche 1-5, wobei der Ruß einen gemäß ASTM D3765 gemessenen Cetyltrimethylammoniumbromid-Oberflächenbereich von 400 bis 600 Meter²/Gramm aufweist.

7. Schwarz gefärbte thermoplastische Zusammensetzung nach einem der Ansprüche 1-6, wobei der Ruß eine gemäß ASTM D1510 gemessene Iodabsorption von 200 bis 300 Milligramm/Gramm aufweist.

8. Schwarz gefärbte thermoplastische Zusammensetzung nach einem der Ansprüche 1-7, umfassend 30 bis 50 Gewichtsteile des Poly(arylenethers), 40 bis 80 Gewichtsteile des Styrolpolymers und 0,3 bis 1,5 Gewichtsteile des Rußes; wobei das Styrolpolymer ein kautschukmodifiziertes Polystyrol und ein Homopolystyrol umfasst.

9. Schwarz gefärbte thermoplastische Zusammensetzung nach Anspruch 8, umfassend:
15 bis 35 Gewichtsteile des kautschukmodifizierten Polystyrols;
25 bis 45 Gewichtsteile des Homopolystyrols; und
wobei der Ruß einen Wärmeverlust von 3 bis 4 Gewichtsprozent,
wobei der Wärmeverlust nach 30 Minuten bei 125°C gemessen und gemäß ASTM D1509-95 bestimmt wird,
einen gemäß DIN 53552 gemessenen Gehalt an flüchtigen Bestandteilen von 9 bis 30 Gewichtsprozent und
einen gemäß ASTM D1512 gemessenen pH-Wert von 2 bis 4 aufweist.

10. Schwarz gefärbte thermoplastische Zusammensetzung nach einem der Ansprüche 1-9, wobei die Zusammensetzung weniger als oder gleich 1 Gewichtsprozent einer Dispersionshilfe für den Ruß umfasst.

11. Gegenstand, umfassend die schwarz gefärbte thermoplastische Zusammensetzung nach einem der Ansprüche 1-10.

12. Verfahren zur Herstellung einer schwarz gefärbten thermoplastischen Zusammensetzung, umfassend:
Schmelzkneten von
20 bis 80 Gewichtsteilen eines Poly(arylenethers),
20 bis 80 Gewichtsteilen eines Styrolpolymers, und
0,1 bis 2 Gewichtsteilen eines Rußes mit
einem Wärmeverlust von mindestens 3 Gewichtsprozent, wobei der Wärmeverlust nach 30 Minuten bei 125°C gemessen und
gemäß ASTM D 1509-95 bestimmt wird, und
einem gemäß DIN 53552 gemessenen Gehalt an flüchtigen Bestandteilen von mindestens 5 Gewichtsprozent,
unter Bildung einer schwarz gefärbten thermoplastischen Zusammensetzung;
wobei sämtliche Gewichtsteile auf 100 Gesamtgewichtsteilen des Poly(arylenethers) und des Styrolpolymers basieren; und
wobei die schwarz gefärbte thermoplastische Zusammensetzung einen gemäß ASTM E308-06 unter Verwendung eines Winkels von 45° unter Ausschluss von spiegelndem Licht gemessenen CIE-Helligkeitswert von CIE 1976 L* von weniger als oder gleich 5 aufweist.

13. Verfahren nach Anspruch 12, wobei der Ruß als eine Vormischung bereitgestellt wird, die 1 bis 30 Gewichtsprozent Ruß und 70 bis 99 Gewichtsprozent eines Trägers, ausgewählt aus der Gruppe bestehend aus einem Styrolpolymer, einer Mischung aus einem Poly(arylenether) und einem Styrolpolymer und einer Mischung aus einem Poly(arylenether) und einem Styrolpolymer und einem Zusatz, umfasst, wobei der Gewichtsprozentanteil an Ruß und der Gewichtsprozentanteil an Träger auf dem Gesamtgewicht der Vormischung basieren.

14. Verfahren nach Anspruch 12 oder 13, wobei das Styrolpolymer ein kautschukmodifiziertes Polystyrol und ein Homopolystyrol umfasst, und umfassend:
Schmelzkneten von
30 bis 50 Gewichtsteilen Poly(arylenether),
15 bis 35 Gewichtsteilen kautschukmodifiziertes Polystyrol,
25 bis 45 Gewichtsteilen Homopolystyrol und
0,3 bis 1,5 Gewichtsteilen Ruß mit
einem Wärmeverlust von 3 bis 4 Gewichtsprozent, wobei der Wärmeverlust nach 30 Minuten bei 125°C gemessen und gemäß ASTM D1509-95 bestimmt wird, und
einem gemäß DIN 53552 gemessenen Gehalt an flüchtigen Bestandteilen von 9 bis 30 Gewichtsprozent und
einem gemäß ASTM D1512 gemessenen pH-Wert von 2 bis 4 unter Bildung einer schwarz gefärbten thermoplastischen Zusammensetzung; und
wobei die schwarz gefärbte thermoplastische Zusammensetzung einen bei 45° unter Ausschluss von spiegelndem Licht gemäß ASTM E308-06 gemessenen CIE-Helligkeitswert von CIE 1976 L* von 2 bis 4 und einen gemäß ASTM E308-06 gemessenen CIE 1976 b*-Wert von -1,5 bis 0 aufweist.

## Revendications

1. Composition thermoplastique colorée en noir, comprenant :
20 à 80 parties en poids d'un poly(arylène éther) ;
20 à 80 parties en poids d'un polymère styrénique ; et
0,1 à 2 parties en poids d'un noir de carbone ayant :
une perte à la chaleur d'au moins 3 % en poids, la perte à la chaleur étant mesurée après 30 minutes à 125°C et étant déterminée selon ASTM D1509-95, et
une teneur en substances volatiles d'au moins 5 % en poids, mesurée selon DIN 53 552 ;
où toutes les parties en poids sont rapportées à 100 parties en poids de la somme du poly(arylène éther) et du polymère styrénique ; et
où la composition thermoplastique colorée en noir présente une clarté CIE 1976, L*, inférieure ou égale à 5, mesurée selon ASTM E308-06 par utilisation d'un angle de 45°, la lumière spéculaire étant exclue.

2. Composition thermoplastique colorée en noir de l'une quelconque de la revendication 1, dans laquelle le noir de carbone a une teneur en substances volatiles de 5 à 30 % en poids.

3. Composition thermoplastique colorée en noir de la revendication 1 ou 2, dans laquelle le noir de carbone a un pH de 2 à 4, mesuré selon ASTM D1512.

4. Composition thermoplastique colorée en noir de l'une quelconque des revendications 1 à 3, dans laquelle le noir de carbone est le produit d'un procédé comprenant un post-traitement par oxydation.

5. Composition thermoplastique colorée en noir de l'une quelconque des revendications 1 à 4, dans laquelle le noir de carbone est le produit d'un procédé comprenant un post-traitement par oxydation avec du dioxyde d'azote.

6. Composition thermoplastique colorée en noir de l'une quelconque des revendications 1 à 5, dans laquelle le noir de carbone a une aire spécifique, mesurée avec du bromure de cétyltriméthylammonium, de 400 à 600 m²/g, mesurée selon ASTM D3765.

7. Composition thermoplastique colorée en noir de l'une quelconque des revendications 1 à 6, dans laquelle le noir de carbone a une absorption de l'iode de 200 à 300 mg/g, mesurée selon STM D1510.

8. Composition thermoplastique colorée en noir de l'une quelconque des revendications 1 à 7, comprenant 30 à 50 parties en poids du poly(arylène éther), 40 à 80 parties en poids du polymère styrénique, et 0,3 à 1,5 parties en poids du noir de carbone ; dans laquelle la composition styrénique comprend un polystyrène modifié par un caoutchouc, et un homopolystyrène.

9. Composition thermoplastique colorée en noir de la revendication 8, comprenant :
15 à 35 parties en poids du polystyrène modifié par un caoutchouc ;
25 à 45 parties en poids de l'homopolystyrène ; et
dans laquelle le noir de carbone a
une perte à la chaleur de 3 à 4 % en poids, la perte à la chaleur étant mesurée après 30 minutes à 125°C et étant déterminée selon ASTM D1509-95,
une teneur en substances volatiles de 9 à 30 % en poids, mesurée selon DIN 53 552, et
un pH de 2 à 4, mesuré selon ASTM D1512.

10. Composition thermoplastique colorée en noir de l'une quelconque des revendications 1 à 9, la composition comprenant une quantité inférieure ou égale à 1 % en poids d'un auxiliaire de dispersion du noir de carbone.

11. Article comprenant une composition thermoplastique colorée en noir de l'une quelconque des revendications 1 à 10.

12. Procédé de préparation d'une composition thermoplastique colorée en noir comprenant :
le malaxage à l'état fondu
de 20 à 80 parties en poids d'un poly(arylène éther),
de 20 à 80 parties en poids d'un polymère styrénique, et
de 0,1 à 2 parties en poids d'un noir de carbone ayant
une perte à la chaleur d'au moins 3 % en poids, la perte à la chaleur étant mesurée après 30 minutes à 125°C et étant déterminée selon ASTM D1509-95, et
une teneur en substances volatiles d'au moins 5 % en poids, mesurée selon DIN 53 552,
pour former une composition thermoplastique colorée en noir ;
où toutes les parties en poids sont rapportées à 100 parties en poids de la somme du poly(arylène éther) et du polymère styrénique ; et
où la composition thermoplastique colorée en noir présente une clarté CIE 1976, L*, inférieure ou égale à 5, mesurée selon ASTM E308-06 par utilisation d'un angle de 45°, la lumière spéculaire étant exclue.

13. Procédé de la revendication 12, dans lequel le noir de carbone est mis à disposition sous forme d'un mélange-maître comprenant 1 à 30 % en poids de noir de carbone et 70 à 99 % en poids d'un support choisi dans le groupe consistant en un polymère styrénique, un mélange d'un poly(arylène éther) et d'un polymère styrénique, et un mélange d'un poly(arylène éther) et d'un polymère styrénique et d'un additif, le pourcentage en poids du noir de carbone et le pourcentage en poids du support étant rapportés au poids total du mélange maître.

14. Procédé de la revendication 12 ou 13, dans lequel le polymère styrénique comprend un polystyrène modifié par un caoutchouc et un homopolystyrène, et comprenant le malaxage à l'état fondu
de 30 à 50 parties en poids d'un poly(arylène éther),
de 15 à 35 parties en poids d'un polystyrène modifié par un caoutchouc,
de 25 à 45 parties en poids d'un homopolystyrène, et
de 0,3 à 1,5 parties en poids d'un noir de carbone ayant
une perte à la chaleur de 3 à 4 % en poids, la perte à la chaleur étant mesurée après 30 minutes à 125°C et étant déterminée selon ASTM D1509-95, et
une teneur en substances volatiles de 9 à 30 % en poids, mesurée selon DIN 53 552, et
un pH de 2 à 4, mesuré selon ASTM D1512, pour former une composition thermoplastique colorée en noir ; et
où la composition thermoplastique colorée en noir présente :
une clarté CIE 1976, L*, de 2 à 4, mesurée à 45°C, la lumière spéculaire étant exclue, selon ASTM E308-06, et
un chroma CIE 1976 b* de -1,5 à 0, mesuré selon ASTM E308-06.
